# DEMANDE DE BREVET EUROPEEN

(11) **EP 1 148 280 A1**
(43) Date de publication de la demande: **24.10.2001**
(21) Numéro de dépôt: 01490013.8
(22) Date de dépôt: 19.04.2001
(51) Int. Cl.: F16K 3/08, F16K 27/04

(54) **Vanne à tiroir**

(30) Priorité: 20.04.2000 FR 0005125
(71) Demandeur: WATTS EUROTHERM S.A., 80390 Fressenneville (FR)
(72) Inventeur: Gaspari, Roberto, Bologna (IT); Parent, Hugues, 80100 Abbeville (FR)
(74) Mandataire: Hénnion, Jean-Claude

(57) **Abrégé**

L'invention se rapporte à un obturateur de fluide hydraulique comprenant :
- un élément (5) fixe traversé par un passage (5A) débouchant dans une (2) de ses faces qui constitue un siège (2),
- un second élément (6) mobile pourvu également d'un passage (6A) traversant, lequel élément (6) mobile a l'une (3) de ses deux faces dite face d'obturation glissant au contact avec le siège (2) de l'élément fixe entre une première position dite ouverte établissant la circulation du fluide au travers des passages (5A,6A) alignés et une position de fermeture interrompant la circulation du fluide et
- un moyen de manoeuvre (7) dudit élément mobile,
cet obturateur étant CARACTERISE en ce qu'au moins l'un des éléments fixe (5) et mobile (6) est en matériau souple.

## Description

L'invention se rapporte à un obturateur de fluide hydraulique comprenant deux éléments de fermeture glissant l'un par rapport à l'autre.

Elle se rapporte également au dispositif de contrôle de l'écoulement d'un fluide équipé dudit obturateur.

Elle se rapporte plus particulièrement mais non limitativement à un groupe de sécurité.

Pour contrôler le passage d'un fluide au travers d'un dispositif, on fait appel à un obturateur.

Classiquement, un obturateur comprend :
- un élément dit de fermeture mobile entre une position dite d'obturation où cet élément de fermeture obture le passage délimité par un siège et une position ouverte où cet élément de fermeture est écarté du siège précité et permet le passage du fluide et
- un moyen de manoeuvre de l'élément de fermeture.

Il existe différents types d'obturateur.

On distingue les obturateurs qui sont déplacés suivant une direction perpendiculaire au plan dans lequel s'étend le siège et ceux qui sont déplacés dans un plan parallèle à celui contenant le siège.

Les premiers de ces dispositifs sont très anciens et équipent beaucoup de robinets tandis que les derniers sont apparus plus récemment.

Pour ces derniers, généralement, le siège est matérialisé par l'une des faces d'un disque fixe présentant au moins une ouverture et sur laquelle face du disque fixe s'applique l'une dite obturante des deux faces d'un disque mobile pourvu également d'un passage qui, suivant la position angulaire du disque mobile par rapport à l'ouverture du disque fixe précité, établit ou interrompt la circulation du fluide.

Le disque fixe est immobilisé en rotation tandis que le disque mobile est alors guidé en rotation.

Pour garantir l'étanchéité, les faces en contact l'une de l'autre doivent être les plus planes possible et s'user le moins rapidement possible.

Pour cela, on fabrique des disques en céramique qui permettent d'obtenir ces deux caractéristiques.

La fabrication de ces disques en céramique se fait par frittage et engendre donc des coûts non négligeables.

En raison du coût de production non négligeable, l'utilisation de ces disques se limite à certains dispositifs complexes tels les robinets thermostatiques qui sont relativement coûteux et dont le coût de ces disques représente une faible part du prix de vente du dispositif.

Par contre, pour des robinets ou des dispositifs plus simples tels un groupe de sécurité équipant par exemple un chauffe-bain où le robinet est rarement utilisé, le prix de ces obturateurs à disques est alors prohibitif et ne présente apparemment pas d'avantage pour l'usage qui en ait fait.

L'invention se propose de remédier notamment à ces inconvénients.

A cet effet, l'invention se rapporte à obturateur de fluide hydraulique comprenant :
- un élément fixe traversé par un passage débouchant dans une de ses faces qui constitue un siège,
- un second élément mobile pourvu également d'un passage traversant, lequel élément mobile a l'une de ses deux faces, dite face d'obturation, glissant au contact avec le siège de l'élément fixe entre une première position dite ouverte établissant la circulation du fluide au travers des passages alignés et une position de fermeture interrompant la circulation du fluide et
- un moyen de manoeuvre dudit élément mobile, cet obturateur étant caractérisé en ce qu'au moins l'un des éléments fixe et mobile est en matériau souple.

L'invention a également pour objet un dispositif de contrôle de l'écoulement d'un fluide équipé du dit obturateur.

L'invention sera bien comprise à l'aide de la description ci-après faite à titre d'exemple non limitatif en regard du dessin ci-annexé qui représente schématiquement :

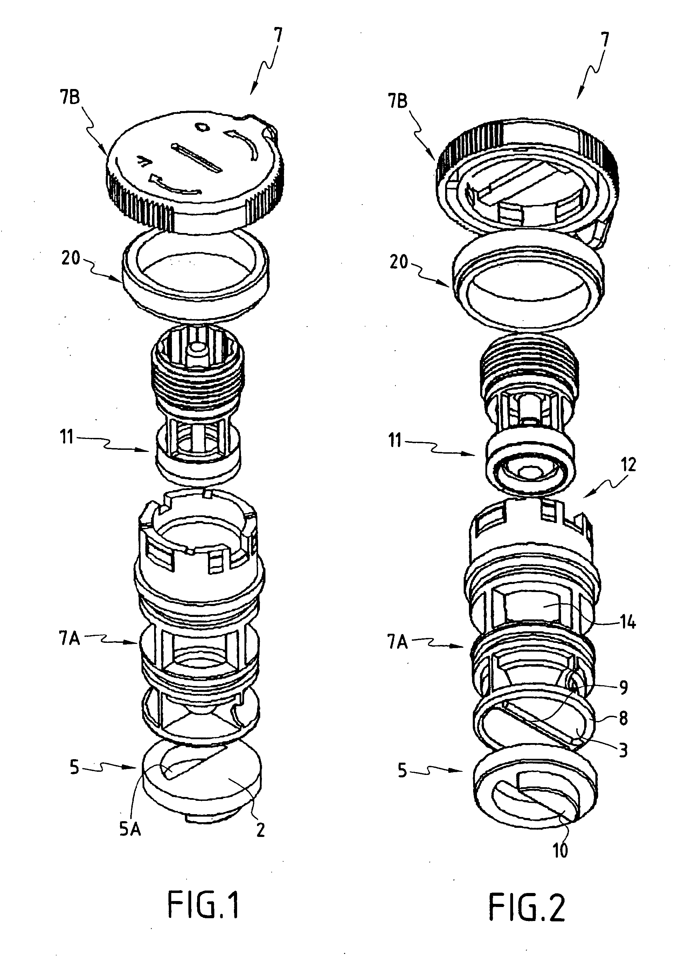

- figures 1 et 2 : des vues éclatées d'un dispositif de contrôle logeant un obturateur,

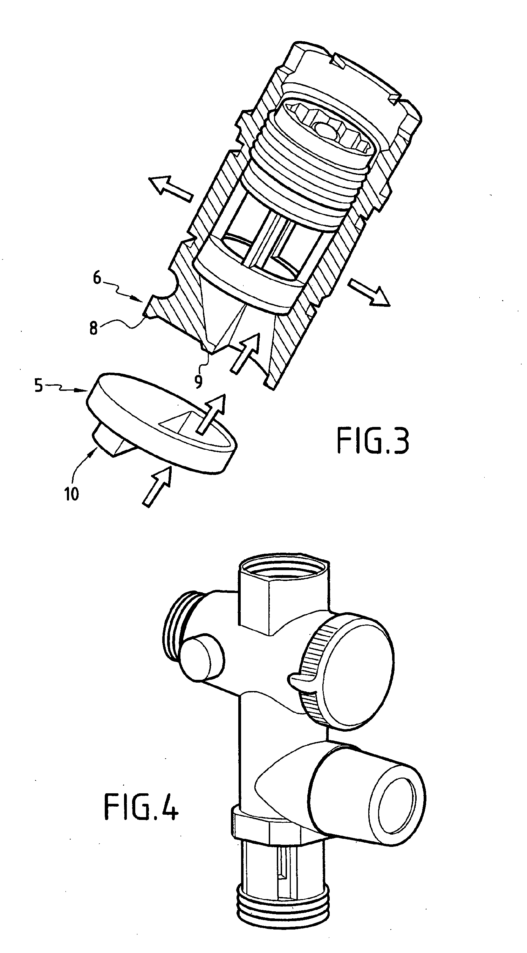

- figure 3 : le dispositif des figures 1 et 2 en coupe partielle,
- figure 4 : un groupe de sécurité,

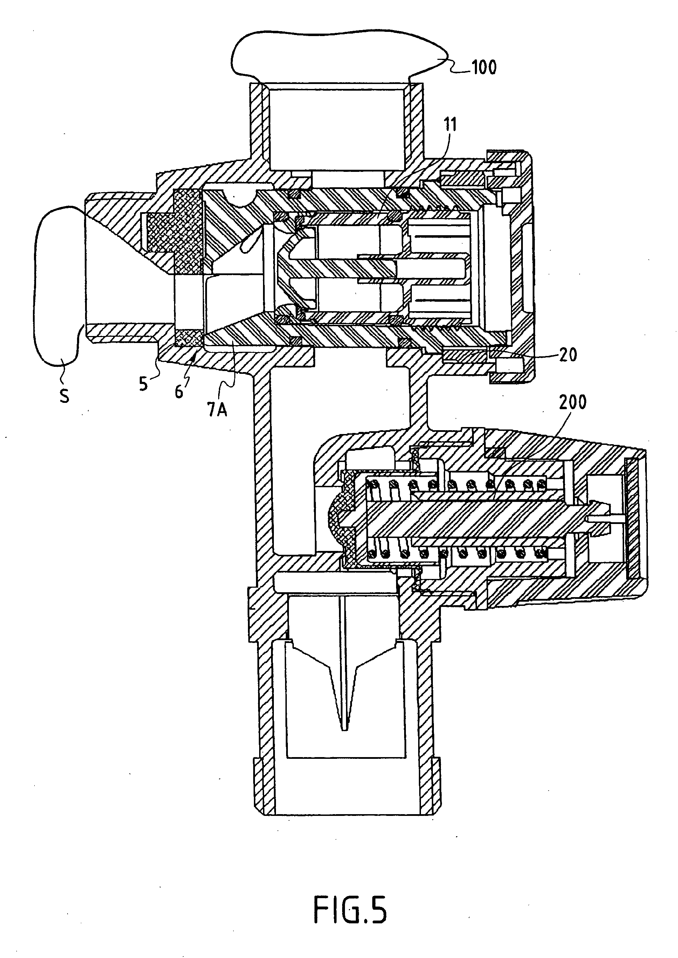

- figure 5 : une coupe axiale de la figure 4.

En se reportant au dessin, on voit un obturateur 1 du type comportant deux surfaces 3, 4 en contact l'une de l'autre et glissant l'une par rapport à l'autre.

Cet obturateur est associé à un dispositif 4 hydraulique et permet d'interrompre la circulation entre un point amont tel une chambre vers un point aval tel une autre chambre.

Classiquement, l'obturateur comprend :
- un élément 5 fixe traversé par un passage 5A débouchant dans une 2 de ses faces qui constitue un siège 2,
- un second élément 6 mobile pourvu également d'un passage 6A traversant lequel élément 6 mobile a l'une 3 de ses deux faces dite face d'obturation glissant au contact avec le siège 2 de l'élément fixe entre une première position dite ouverte établissant la circulation du fluide au travers des passages 5A, 6A alignés et une position de fermeture interrompant la circulation du fluide et
- un moyen de manoeuvre 7 dudit élément mobile.

Le moyen de manoeuvre comprend un moyen 7B de préhension et un moyen 7A de transmission du mouvement exercé sur le moyen de préhension.

Selon une caractéristique de l'invention, au moins l'un des éléments fixe 5 et mobile 6 est en matériau souple.

Par matériau souple, on comprendra un matériau qui a une dureté largement inférieure à celle d'une céramique.

De préférence, l'un des éléments fixe ou mobile est en matériau composé principalement de caoutchouc tandis que l'autre élément est en plastique dur.

Le matériau plastique offre une surface de contact plus lisse que celle du caoutchouc.

La nature élastique, même relativement faible, des matériaux assure l'étanchéité.

Avantageusement, l'une des deux faces en contact l'une de l'autre est une face plane tandis que l'autre face présente en saillie :
- d'une part, un bourrelet 8 entourant à la fois la surface obturante et l'orifice par lequel transite le fluide et
- d'autre part, un second bourrelet 9 qui, s'étendant à l'intérieur de la surface délimitée par le premier bourrelet, matérialise la séparation entre la surface obturante et l'orifice.

Par surface obturante, on comprendra la surface qui se positionne au regard de l'ouverture de l'élément fixe pour empêcher la circulation du fluide.

La présence de ce bourrelet réduit les forces de frottement lors du déplacement de l'élément mobile.

Ainsi, au regard de la face plane se positionne soit une cavité ouverte, soit une cavité fermée établissant ou n'établissant pas la communication entre l'amont et l'aval.

C'est l'élément mobile qui présente les bourrelets 8, 9.

Avantageusement, l'élément mobile se présente sous la forme d'un disque et son déplacement sera réalisé de préférence autour de son axe central.

Par exemple, le passage 5A, 6A aura une forme de demi-cercle.

Il n'est pas nécessaire que l'élément fixe soit également un disque mais notamment pour des raisons d'encombrement, cette forme sera choisie préférentiellement.

L'élément fixe, notamment lorsqu'il s'agit d'un disque, comprend un moyen de calage 10 notamment en rotation qui coopère avec une partie fixe du dispositif qui le loge.

Dans la forme de réalisation présentée, c'est la face opposée à celle 2 constituant le siège qui présente ce moyen 10 de calage en rotation.

En l'occurrence, il s'agit d'un forme en saillie qui s'emboîte dans une cavité.

Le bourrelet 8 aura alors une forme d'anneau avec une barrette 9 centrale.

L'élément fixe est en caoutchouc et donc l'autre en plastique.

On pourrait bien évidemment utiliser deux pièces en plastique.

Le coût de fabrication de ces éléments fixe ou mobile se trouve alors réduit et ils peuvent être intégrés à des dispositifs de contrôle de l'écoulement comme par exemple un groupe de sécurité pour ballon d'eau chaude.

Ce type d'obturateur peut donc s'intégrer dans des dispositifs de contrôle du débit d'un fluide.

On a pris pour exemple non limitatif un groupe de sécurité.

Selon le sens de circulation du réseau d'eau vers le ballon d'eau chaude, classiquement, un tel dispositif de sécurité comprend un robinet d'arrêt permettant d'isoler le réseau d'eau du ballon d'eau chaude, un clapet anti-retour pour assurer l'antipollution du réseau d'eau lorsque le robinet d'arrêt est ouvert permettant à l'eau du réseau de pénétrer dans le ballon et une soupape de sécurité dont la fonction est d'éviter une surpression dans le ballon d'eau chaude.

Selon une caractéristique de l'invention, le robinet d'arrêt du groupe de sécurité comprend un obturateur du type précité monté coaxialement avec le clapet anti-retour.

Avantageusement, le disque mobile est porté par une pièce 7A tubulaire mobile en rotation dans le corps du groupe de sécurité, cette pièce tubulaire logeant elle-même le clapet 11 anti-retour calé en translation dans la dite pièce et cette pièce tubulaire présente des moyens d'accouplement 12 en rotation avec un moyen de préhension accessible depuis l'extérieur du corps du dispositif.

Le disque mobile est immobilisé en rotation sur la pièce tubulaire.

Le calage en translation du clapet peut être réalisé par un filetage ou deux épaulements.

Le disque mobile 6 sera donc porté par une des extrémités de la pièce tubulaire 7A tandis que l'autre extrémité présentera le moyen d'accouplement avec le moyen de préhension.

Le corps tubulaire 7A constitue partiellement le moyen 7 de manoeuvre du disque mobile.

Le moyen 7B de préhension présente deux fonctions une première étant d'assurer la manoeuvre de la pièce tubulaire et une deuxième étant d'assurer la fermeture du corps tubulaire logeant l'obturateur et le clapet anti-retour.

Le disque mobile peut avantageusement être moulé sur le corps tubulaire.

Ce corps tubulaire présente au niveau de son enveloppe des lumières 14 permettant au fluide ayant ouvert le clapet anti-retour d'être acheminé vers la partie aval.

Pour cela, sensiblement au niveau de ces lumières, le corps du dispositif de sécurité présente un court manchon pour permettre une liaison avec le ballon et à l'opposé de ce court manchon, un deuxième manchon logeant la soupape de sécurité.

Cette disposition ainsi que l'emploi d'un obturateur du type précité permettent de ramener dans le même plan le moyen de préhension pour la manoeuvre de l'obturateur et l'organe de manoeuvre pour tester le bon fonctionnement de la soupape de surpression.

L'élément fixe est arrêté en translation par le corps du groupe de sécurité d'un côté et par l'axe 7A de manoeuvre de l'autre. Son arrêt en rotation est obtenu par une forme 10 demi-cylindrique mâle qui s'emmanche dans la même forme femelle au niveau du corps du groupe de sécurité.

La compression de l'élément 5 fixe entre l'axe 7A de manoeuvre et le corps est réalisé par l'intermédiaire d'un écrou 20 (possibilité d'utiliser un clips) qui appuie directement sur l'axe de manoeuvre. Cette compression permet d'assurer un fonctionnement doux et sans fuite.

Le clapet de non retour est monté dans l'axe de manoeuvre et est maintenu en position dans un filetage.

Son démontage est rendu aisé par l'accessibilité qu'offre le chapeau. Ce dernier assure par un encliquetage la fonction de « visite » du clapet et en plus assure la transmission de l'effort de manoeuvre par l'intermédiaire de créneaux.

La fonction générale de chacun des organes est la suivante :
- le joint de forme assure par son contact plan avec l'axe de manoeuvre la fonction d'étanchéité du robinet d'arrêt du groupe de sécurité,
- l'axe de manoeuvre assure la rigidité de l'ensemble robinet; il sert également de porte clapet et contribue à la transmission de l'effort du chapeau,
- l'écrou de compression assure de par son nom la parfaite application de la face avant de l'axe de manoeuvre sur la face plan du joint de forme; cette compression permet d'assurer un fonctionnement sans fuite et doux,
- le clapet de non retour assure la fonction d'anti-pollution; il est complètement intégré au niveau de l'axe de manoeuvre afin d'obtenir un ensemble compact et rigide,
- le chapeau, d'une part, sert de préhension pour manoeuvrer le robinet et assure la transmission du couple de manoeuvre de l'axe, sa conception permettant d'utiliser par exemple un tournevis pour le manoeuvre à distance et, d'autre part, permet de contrôler aisément le clapet par le fait qu'il est encliqueté sur l'axe.

Les avantages de l'utilisation d'un obturateur du type précité sur un groupe de sécurité sont les suivants.

La conception de l'ensemble axe de manoeuvre/clapet a été pensé de façon à minimiser les contraintes au niveau de l'ensemble afin de ne pas générer de point de fatigue trop important.

En effet, les faces sur lesquelles s'applique la pression du ballon étant en opposition, l'ensemble se trouve alors dans une position d'équilibre, ce qui a pour conséquence de fournir un robinet souple à manoeuvrer.

Toujours, par rapport à la conception du robinet d'arrêt, on intègre directement dans l'axe de manoeuvre le clapet de non retour. Ce dernier est maintenu en place par un filetage ce qui évite d'utiliser des bouchons pour pouvoir monter, changer, arrêter le clapet.

On obtient donc au final un ensemble axe/clapet compact et facilement interchangeable tant le robinet, le clapet ou l'ensemble.

On a alors la possibilité de fournir un système complet permettant d'assurer les fonctions de groupe de sécurité mais également d'intégration de vase d'expansion à circulation.

Avantageusement, les faces sur lesquelles s'applique la pression de la réserve 100 sont en opposition et, de ce fait, permettent d'obtenir un équilibrage des forces s'exerçant sur l'ensemble clapet 11, axe de manoeuvre 7A et élément mobile 5, ce qui a pour conséquence de fournir un robinet souple à manoeuvrer.

## Revendications

1. Obturateur de fluide hydraulique comprenant :
- un élément (5) fixe traversé par un passage (5A) débouchant dans une (2) de ses faces qui constitue un siège (2),
- un second élément (6) mobile pourvu également d'un passage (6A) traversant, lequel élément (6) mobile a l'une (3) de ses deux faces dite face d'obturation glissant au contact avec le siège (2) de l'élément fixe entre une première position dite ouverte établissant la circulation du fluide au travers des passages (5A, 6A) alignés et une position de fermeture interrompant la circulation du fluide et
- un moyen de manoeuvre (7) dudit élément mobile,
cet obturateur étant **CARACTERISE en ce qu'**au moins l'un des éléments fixe (5) et mobile (6) est en matériau souple.

2. Obturateur selon la revendication 1 **caractérisé en ce que** l'un des éléments fixe ou mobile est en matériau composé principalement de caoutchouc tandis que l'autre élément est en plastique dur.

3. Obturateur selon la revendication 1 ou 2 **caractérisé en ce que** l'une des deux faces en contact l'une de l'autre est une face plane tandis que l'autre face présente en saillie
- d'une part, un bourrelet (8) entourant à la fois la surface obturante et l'orifice par lequel transite le fluide et
- d'autre part, un second bourrelet (9) qui, s'étendant à l'intérieur de la surface délimitée par le premier bourrelet, matérialise la séparation entre la surface obturante et l'orifice.

4. Obturateur selon la revendication 3 **caractérisé en ce que** l'élément mobile présente les bourrelets (8, 9).

5. Obturateur selon la revendication 1 **caractérisé en ce que** l'élément mobile se présente sous la forme d'un disque et son déplacement est réalisé autour de son axe central.

6. Obturateur selon la revendication 5 **caractérisé en ce que** l'élément (5) fixe est un disque et la face opposée à celle (2) constituant le siège de cet élément fixe présente un moyen (10) de calage en rotation.

7. Dispositif de contrôle de l'écoulement d'un fluide **caractérisé en ce qu'**il est équipé d'un obturateur selon l'une quelconque des revendications 1 à 6.

8. Dispositif de contrôle selon la revendication 7 **caractérisé en ce que** le dispositif est un groupe de sécurité disposé entre l'alimentation (S) en eau et une réserve (100) comprenant donc, selon le sens de circulation du réseau d'eau, un robinet d'arrêt permettant d'isoler le réseau d'eau de l'aval, un clapet anti-retour pour assurer l'anti-pollution du réseau d'eau et une soupape (200) de sécurité.

9. Dispositif de contrôle selon la revendication 8 **caractérisé en ce que** :
- l'obturateur formé des éléments fixe et mobile est monté coaxialement au clapet anti-retour et,
- le disque mobile est porté par une pièce (7A) tubulaire mobile en rotation dans le corps du groupe de sécurité, cette pièce tubulaire logeant elle-même le clapet (11) anti-retour calé en translation dans la dite pièce et cette pièce tubulaire présente des moyens d'accouplement (12) en rotation avec un moyen de préhension accessible depuis l'extérieur du corps du dispositif, la dite pièce tubulaire constituant partiellement le moyen de manoeuvre de l'élément mobile.
